Europäisches Patentamt

European Patent Office

Office européen des brevets

(19)

(11)     **EP 1 230 184 B1**

(12)     **FASCICULE DE BREVET EUROPEEN**

(45) Date de publication et mention
de la délivrance du brevet:
**04.06.2003   Bulletin 2003/23**

(21) Numéro de dépôt: **00974618.1**

(22) Date de dépôt: **31.10.2000**

(51) Int Cl.⁷: **C03C 13/00**

(86) Numéro de dépôt international:
**PCT/FR00/03038**

(87) Numéro de publication internationale:
**WO 01/032576 (10.05.2001 Gazette 2001/19)**

(54) **FILS DE VERRE DE RENFORCEMENT, COMPOSITE DE CEUX-CI, PROCEDE DE LEUR FABRICATION ET COMPOSITION DE VERRE**

GLASFASERN ZUR VERSTÄRKUNG, KOMPOSITWERKSTOFF DAMIT, VERFAHREN ZU DEREN HERSTELLUNG UND GLASZUSAMMENSETZUNG

GLASS YARNS, COMPOSITE THEREOF, METHOD FOR MAKING SAME AND REINFORCING GLASS COMPOSITION

(84) Etats contractants désignés:
**AT BE CH CY DE DK ES FI FR GB GR IE IT LI LU MC NL PT SE**

(30) Priorité: **04.11.1999  FR 9913836**

(43) Date de publication de la demande:
**14.08.2002   Bulletin 2002/33**

(73) Titulaire: **Saint Gobain Vetrotex France S.A.**
**F-73000 Chambéry (FR)**

(72) Inventeurs:
• **CREUX, Sophie**
  **F-73290 La Motte Servolex (FR)**
• **LECLERCQ, Michel**
  **F-73290 La Motte Servolex (FR)**
• **FOURNIER, Pascal**
  **F-69006 Lyon (FR)**

(74) Mandataire: **Muller, René**
**SAINT-GOBAIN RECHERCHE**
**39, quai Lucien Lefranc**
**93303 Aubervilliers (FR)**

(56) Documents cités:
**WO-A-85/02393          WO-A-85/02395**
**WO-A-99/12858          FR-A- 2 692 248**
**GB-A- 1 391 384        JP-A- 57 077 043**
**RU-C- 2 027 687**

## Description

La présente invention concerne des fils (ou " fibres ") de verre " de renforcement", c'est-à-dire utilisables pour le renforcement de matières organiques et/ou inorganiques et utilisables comme fils textiles, ces fils étant susceptibles d'être obtenus par le procédé qui consiste à étirer mécaniquement des filets de verre fondu s'écoulant d'orifices disposés à la base d'une filière généralement chauffée par effet Joule.

La présente invention vise plus précisément des fils de verre présentant une composition nouvelle particulièrement avantageuse.

Le domaine des fils de verre de renforcement est un domaine très particulier de l'industrie du verre. Ces fils sont élaborés à partir de compositions de verre spécifiques, le verre utilisé devant pouvoir être étiré sous forme de filaments de quelques micromètres de diamètre suivant le procédé précédemment défini et devant permettre la formation de fils continus aptes à remplir notamment leur rôle de renfort. Les fils de verre de renforcement les plus couramment utilisés sont ainsi les fils formés de verres qui dérivent de l'eutectique à 1170°C du diagramme ternaire $SiO_2$-$Al_2O_3$-CaO, en particulier les fils désignés sous le nom de fils de verre E, dont l'archétype est décrit dans les brevets US-A-2 334 981 et US-A-2 571 074. Les fils de verre E présentent une composition essentiellement à base de silice, d'alumine, de chaux et d'anhydre borique, l'anhydre borique, présent à des taux allant en pratique de 5 à 13% dans les compositions de verres qualifiés " verre E ", remplaçant une partie de la silice, les fils de verre E se caractérisant en outre par une teneur en oxydes alcalins (essentiellement $Na_2O$ et/ou $K_2O$) limitée.

Depuis les deux brevets cités, les verres comprenant ces constituants ont fait l'objet de nombreuses modifications ayant pour but de réduire les émanations de produits susceptibles de polluer l'atmosphère, de réduire le coût de la composition en diminuant la teneur des constituants les plus onéreux, d'améliorer l'aptitude de ces verres au fibrage (le fibrage ou formage correspondant à l'opération d'étirage des filaments de verre à partir d'une filière selon le procédé précédemment évoqué), notamment en diminuant leur viscosité aux températures élevées ainsi que leur tendance à dévitrifier, d'améliorer telle ou telle propriété particulière.

On nomme "température de liquidus", notée "$T_{liquidus}$", la température où la vitesse de croissance du cristal le plus réfractaire est nulle. La température de liquidus donne la limite supérieure de zone de température où le verre peut avoir tendance à dévitrifier.

Des tentatives de réduire le coût des compositions ont notamment été faites mais généralement au détriment de leur aptitude au fibrage, la mise en oeuvre de ces verres pour obtenir des fils de renforcement devenant généralement plus difficile ou délicate, obligeant éventuellement à des modifications des installations de fibrage existantes ou des conditions de travail et entraînant éventuellement des baisses de rendement et une augmentation du taux des déchets obtenus conduisant au final à une augmentation du coût global de la production. Des solutions ont été proposées dans les demandes WO 99/01393 et WO 99/12858.

Les compositions correspondant à ces solutions, telles que décrites dans les exemples de ces demandes, conduisent à des températures caractéristiques relativement élevées.

On nomme "températures caractéristiques" les températures correspondant à des viscosités adaptées aux différentes étapes du procédé de fabrication des fils de verre :

- la température correspondant à une viscosité égale à $10^3$ Poises (décipascal seconde) donne une indication précieuse sur la température autour de laquelle s'effectue généralement le fibrage, à partir notamment de filières en platine ;
- la température correspondant à une viscosité égale à $10^{2.5}$ Poises (décipascal seconde) donne une indication précieuse sur la température autour de laquelle s'effectue généralement le conditionnement du verre. On nomme conditionnement du verre l'étape qui consiste notamment à transférer le verre chaud hors du four où sont fondues les matières premières et/ou les produits recyclés par des canaux destinés à alimenter les filières en platine. On cherche notamment à éviter toute dévitrification du verre lors de cette étape.

On nomme "plage de fibrage", l'écart de température entre la température caractéristique correspondant à une viscosité de $10^{2.5}$ Poises (décipascal seconde) et la température de liquidus.

En effet les températures correspondant à une viscosité égale à $10^3$ Poises (décipascal seconde) (notées Spinning température dans la "table 1") sont comprises entre 1255 et 1287°C selon les exemples (exemples 1 à 4) de WO 99/01393.

Les températures correspondant à une viscosité égale à $10^3$ Poises (décipascal seconde) sont comprises entre 1255 et 1262°C et les températures correspondant à une viscosité égale à $10^{2.5}$ Poises (décipascal seconde) sont comprises entre 1341 et 1351°C selon les exemples (exemples 1 et 2) de WO 99/12858.

Ces températures caractéristiques sont plus élevées que les températures caractéristiques d'un verre E standard d'environ 50°C et même davantage.

Il en résulte la nécessité de maintenir le verre à des températures plus élevées à la fois pendant le conditionnement du verre et dans le dispositif de fibrage lui-même.

Cet inconvénient se traduit par un surcoût dans l'utilisation des compositions citées dans les deux demandes mentionnées, d'une part lié aux compléments d'apport thermique nécessaires pour conditionner le verre et aux coûts liés à un renouvellement plus fréquent des outils de fibrage, notamment les pièces en platine, dont le vieillissement s'accélère quand la température de fibrage s'élève.

Ce surcoût réduit le montant des économies que permet de réaliser le prix avantageux des matières premières des compositions décrites dans les deux demandes citées.

La mise au point des compositions plus économiques que les compositions de verre E standard et dont les propriétés de fibrage sont voisines de celles du verre E standard reste encore à faire et est particulièrement souhaitable.

La présente invention a ainsi pour objet des fils de verre obtenus à partir de matières premières économiques et présentant une aptitude au fibrage proche de celle du verre E.

Les fils de verre selon l'invention sont obtenus à partir d'une composition comprenant essentiellement les constituants suivants dans les limites définies ci-après exprimées en pourcentages pondéraux :

| | |
|---|---|
| $SiO_2$ | 54,5 à 58 % |
| $Al_2O_3$ | 12 à 15,5 % |
| $SiO_2 + Al_2O_3$ | 70 à 73 % |
| $CaO$ | 17 à 25 % |
| $MgO$ | 0 à 5 % |
| $RO = CaO + MgO$ | 21 à 28 % |
| $R_2O = Na_2O + K_2O + Li_2O$ | jusqu'à 2% |
| $TiO_2$ | moins de 1 % |
| $Fe_2O_3$ | moins de 0,5 % |
| $B_2O_3$ | jusqu'à 3 % |
| $F_2$ | moins de 1 % |

et telle que le ratio $R1 = Al_2O_3/CaO$ soit inférieur à 0,7, et lorsque $SiO_2$ est supérieur à 57 %, le taux de bore $B_2O_3$ est supérieur à 2 %.

Selon une variante avantageuse de l'invention, les constituants de la composition respectent le critère basé sur le ratio

$$R2 = \frac{SiO_2 + Al_2O_3}{RO + R_2O + B_2O_3},$$

, tel que $2,35 < R2 < 2,70$. Ce ratio peut s'interpréter notamment comme le rapport de la somme des éléments formateurs du réseau des verres sur la somme des éléments modificateurs de ce réseau.

A ce titre, on peut le considérer comme un paramètre de réglage de la viscosité des verres considérés.

La silice est l'un des oxydes qui forme le réseau des verres selon l'invention et joue un rôle essentiel pour leur stabilité.

Le taux de silice, $SiO_2$, des compositions sélectionnées est compris entre 54,5 et 58 %, notamment supérieur à 55 %, voire supérieur à 55,5 % et/ou notamment inférieur ou égal à 57 %.

Pour les compositions dont le taux de $SiO_2$ est supérieur à 57 %, le taux de $B_2O_3$ est supérieur à 2 %.

L'alumine constitue également un formateur du réseau des verres selon l'invention et joue un rôle très important à l'égard de la résistance de ces verres. Dans le cadre des limites définies selon l'invention, la diminution du pourcentage de cet oxyde en dessous de 12 % entraîne une augmentation sensible de l'attaque hydrolytique du verre tandis qu'une trop forte augmentation du pourcentage de cet oxyde entraîne des risques de dévitrification et une augmentation de la viscosité.

Le taux d'alumine, $Al_2O_3$, des compositions sélectionnées est compris entre 12 et 15,5 %, notamment supérieur à 13 % et/ou notamment inférieur à 15 %.

Le taux de chaux, $CaO$, des compositions sélectionnées est compris entre 17 et 25 %, notamment supérieur à 18 %, voire même supérieur à 20 % et/ou notamment inférieur à 24 %.

Le taux de magnésie, $MgO$, des compositions sélectionnées est compris entre 0 et 5 %, notamment supérieur à 0,1 %, et même supérieur à 0,5 %, voire même supérieur à 1 % et/ou inférieur à 4 %.

Les limites définies en oxydes alcalino-terreux, chaux et magnésie, permettent de régler la viscosité et contrôler la dévitrification des verres selon l'invention. Une bonne aptitude au fibrage est obtenue en choisissant la somme de ces oxydes alcalino-terreux comprise entre 21 et 28 % : en effet on a pu constater que les phénomènes de dévitrification s'accentuent dans des proportions inacceptables au-dessus de 28 %, et que la viscosité des verres devient généralement trop élevée quand la teneur en alcalino-terreux est inférieure à 21 %.

Des alcalins, notamment soude, $Na_2O$, et potasse, $K_2O$, peuvent être introduits dans les compositions des fils de verre selon l'invention pour limiter plus la dévitrification et réduire éventuellement la viscosité du verre. La teneur en oxydes alcalins $Na_2O$ + $K_2O$ + $Li_2O$ doit cependant rester inférieure ou égale à 2 % pour éviter une augmentation de la conductivité électrique inacceptable pour les applications dans le domaine de l'électronique et pour éviter une diminution pénalisante de la résistance hydrolytique du verre. Le taux d'alcalin est généralement supérieur à 0,1 %, dû à la présence d'impuretés contenues dans les matières premières porteuses d'autres constituants. La composition peut contenir un seul oxyde alcalin (parmi $Na_2O$, $K_2O$ et $Li_2O$) ou peut contenir une combinaison d'au moins deux oxydes alcalins.

Selon une variante de l'invention, le taux d'alcalin est essentiellement obtenu avec de la soude, $Na_2O$.

Le taux de bore est inférieur ou égal à 3 %. On souhaite en effet limiter cet oxyde à de faibles teneurs car le prix des matières premières porteuses de bore est élevé. Dans un mode de réalisation de l'invention, le taux de bore peut être avantageusement inférieur ou égal à 0,5%. Du bore peut être introduit en quantité modérée par l'incorporation, comme matière première, de déchets de fils de verre comprenant du bore, par exemple des déchets de fils de verre E. Cette variante correspond notamment aux compositions dont le taux de bore est compris entre 0,5 et 3 %.

Du Fluor, $F_2$, peut être ajouté en faible quantité pour améliorer la fusion du verre, ou être présent à l'état d'impureté.

Les teneurs éventuelles en $TiO_2$, et/ou en $Fe_2O_3$ sont plutôt à considérer comme des teneurs en impuretés, fréquemment rencontrées dans cette famille de composition.

Dans la suite du texte, tout pourcentage d'un constituant de la composition doit se comprendre comme un pourcentage pondéral, et les compositions selon l'invention peuvent comporter jusqu'à 2 ou 3 % de composés à considérer comme des impuretés non analysées, comme cela est connu dans ce genre de composition.

Dans le cadre des limites définies précédemment, on a pu établir que des compositions respectant la somme des éléments formateurs de réseau $SiO_2$ + $Al_2O_3$ comprise entre 70 et 73 %, notamment inférieure ou égale à 72 %, présentent un domaine particulièrement intéressant pour les conditions de fibrage. En effet, il est connu que $SiO_2$ et $Al_2O_3$ sont des oxydes formateurs du réseau des verres qui permettent de régler la viscosité des verres. Des compositions comportant moins de 70 % de $SiO_2$ + $Al_2O_3$ sont trop fluides pour autoriser une plage de fibrage (définie comme la différence entre la température correspondant à une viscosité du verre égale à $10^{2.5}$ Poises (décipascal seconde) (notée $T_{log2.5}$) et la température de liquidus (notée $T_{liquidus}$) satisfaisante. Les compositions qui comportent plus de 73 % de $SiO_2$ + $Al_2O_3$ sont trop visqueuses pour être fibrées dans des conditions satisfaisantes et présentent des températures de liquidus élevées et dévitrifient facilement au fibrage.

Un effet surprenant a été observé pour les compositions présentant un ratio R1 = $Al_2O_3$/CaO inférieur à 0,7. En effet, les compositions selon l'invention présentent une dévitrification notablement plus modérée que des compositions de domaines voisins. On peut ainsi obtenir des compositions dont la température de liquidus, $T_{liquidus}$, est inférieure ou égale à 1200°C.

Un critère particulièrement avantageux permet notamment de sélectionner des compositions dont les viscosités sont adaptées aux conditions de fibrage, notamment avec une plage de fibrage supérieure à 100°C, tout en obtenant des températures de conditionnement raisonnablement basses, notamment avec la température correspondant à une viscosité de $10^{2.5}$ Poises inférieure à 1330°C. Ce critère, basé sur le ratio R2, s'écrit : 2,35 < R2 < 2,70.

Il s'est avéré que cette sélection permet d'obtenir, grâce à un compromis judicieux entre l'effet des différents oxydes, des plages de fibrage importantes. notamment supérieures à 100°C, et même à 120°C. Les verres selon l'invention peuvent ainsi être fibrés avec un rendement satisfaisant dans des conditions industrielles d'exploitation.

En outre, ces verres présentent une viscosité de $10^{2.5}$ Poises (soit environ 316 Poises) à une température comprise entre 1300 et 1330°C, notamment inférieure ou égale à 1320°C et une viscosité de $10^3$ Poises à une température comprise entre 1220 et 1250°C. notamment inférieure ou égale à 1240°C, ce qui autorise leur transport dans les canaux des fours sans dépenses importantes d'énergie et leur utilisation dans des installations traditionnelles de fibrage de verre E. De ce fait et du fait du coût réduit des compositions selon l'invention, le coût global de production des fils selon l'invention est avantageusement diminué par rapport au coût habituel de production des fils de verre E.

Les teneurs respectives en $F_2$ et en $Li_2O$ restent également avantageusement inférieures à 1 % pour éviter des défauts d'opacification des verres, des problèmes importants de traitement de fumées et les problèmes précédemment mentionnés liés aux taux importants d'oxydes alcalins, cette limitation permettant également d'obtenir les verres particulièrement économiques et de mise en oeuvre facile recherchés selon l'invention.

De même les taux limités de bore $B_2O_3$ (inférieur à 3 %) permettent de réduire le coût du traitement des fumées comparé à celui des verres E traditionnels.

Les fils selon l'invention peuvent ainsi être réalisés et mis en oeuvre comme les fils de verre E et sont en outre beaucoup plus économiques.

Les fils de verre selon l'invention sont obtenus à partir des verres de composition précédemment décrite selon le procédé suivant : on étire une multiplicité de filets de verre fondu, s'écoulant d'une multiplicité d'orifices disposés à la base d'une ou plusieurs filières, sous la forme d'une ou plusieurs nappes de filaments continus, puis on rassemble les filaments en un ou plusieurs fils que l'on collecte sur un support en mouvement. Il peut s'agir d'un support en rotation lorsque les fils sont collectés sous forme d'enroulements ou d'un support en translation lorsque les fils sont coupés par un organe servant également à les étirer ou lorsque les fils sont projetés par un organe servant à les étirer de façon à former un mat.

Les fils obtenus, éventuellement après d'autres opérations de transformation, peuvent ainsi se présenter sous différentes formes : fils continus, fils coupés, tresses, rubans, mats, réseaux, voiles (ou autres structures où les filaments constituant les fils sont dissociés et dispersés)..., ces fils étant composés de filaments de diamètre pouvant aller de 5 à 24 microns environ.

Le verre fondu alimentant les filières est généralement obtenu à partir de matières (ou produits ou composants ou matériaux) éventuellement pures (issues par exemple de l'industrie chimique) mais le plus souvent naturelles, ces dernières comprenant parfois des impuretés à l'état de traces, ces matières premières (pures ou naturelles) étant mélangées dans des proportions appropriées pour obtenir la composition désirée, puis étant fondues. La température du verre fondu (et donc sa viscosité) est réglée de façon traditionnelle par l'opérateur de façon à permettre le fibrage du verre en évitant notamment les problèmes de dévitrification et de façon à obtenir la meilleure qualité possible des fils de verre. Avant leur rassemblement sous forme de fils, les filaments sont généralement revêtus d'une composition d'ensimage (choisie de façon traditionnelle en fonction notamment de la destination des fils) permettant de les protéger de l'abrasion et facilitant leur association ultérieure avec des matières à renforcer.

Selon un procédé de fabrication des fils selon l'invention particulièrement avantageux, une partie au moins des matières premières utilisées pour réaliser le verre fondu sont des déchets de fils de verre, préférentiellement des déchets de fils de verre de renforcement, par exemple des déchets de fils de verre tels que définis selon l'invention et/ou des déchets de fils de verre E. Dans ce dernier cas, il s'agit par exemple de déchets de fils présentant la composition suivante, exprimée en pourcentages pondéraux : $SiO_2$ : 52-57 % ; $Al_2O_3$ : 12-16 % ; CaO : 16-25 % ; MgO : 0-6 % ; $B_2O_3$ : 5-13 %, oxydes alcalins (essentiellement $Na_2O$ et/ou $K_2O$) : 0-2 % (cette composition pouvant également comprendre d'autre(s) composant(s) dans des proportions n'excédant pas 1,5 % pour chaque autre composant), les fils de cette composition étant en pratique considérés comme étant des fils de verre E. De façon particulièrement surprenante, les déchets de fils de verre tels que les fils de verre E, posant des difficultés de recyclage dans la fabrication des fils de verre E, sont ici parfaitement réutilisables dans la fabrication de fils de verre selon l'invention. Ils peuvent être réintroduits sans difficulté dans le mélange de matières premières utilisé pour réaliser le verre fondu, les proportions des autres matières premières utilisées (généralement des matières premières naturelles et/ou pures) étant réajustées pour obtenir la composition telle que définie selon l'invention. De la même façon des déchets de fils tels que définis selon l'invention peuvent être utilisés et/ou éventuellement des déchets d'autres fils de verre de renforcement. Les déchets de fils de verre proviennent généralement des déchets ou rebuts non bobinés (ou non récupérés sur des supports en translation) récupérés sous les filières de fabrication des fils de verre mais peuvent également provenir des déchets ou rebuts de finissage des produits obtenus (bords découpés des mats, extrémités des enroulements,...), ces déchets ou rebuts étant éventuellement traités (par exemple thermiquement) afin d'éliminer, le cas échéant, l'ensimage les recouvrant et étant broyés de façon à présenter, le cas échéant, une granulométrie comparable à celle des autres matières premières utilisées pour réaliser les fils selon l'invention.

De préférence, le taux de déchets de fils de verre présents dans le mélange de matières premières que l'on fond pour obtenir le verre fondu de composition selon l'invention, représente de 0 à 35 % en poids du mélange, de façon particulièrement préférée il est compris entre 0 et 25 % en poids du mélange et de façon particulièrement avantageuse il constitue de 5 à 20 % en poids du mélange. Le procédé utilisant les déchets de fils de verre est particulièrement économique, et permet d'obtenir des coûts de fabrication encore plus avantageux conformément à l'invention.

Les composites obtenus à partir des fils selon l'invention comprennent au moins une matière organique et/ou au moins une matière inorganique et comprennent des fils de verre, une partie au moins des fils étant les fils de verre selon l'invention.

Eventuellement, les fils de verre selon l'invention peuvent déjà avoir été associés, par exemple en cours d'étirage, à des filaments de matière organique de façon à obtenir des fils composites. Par extension, par " fils de verre dont la composition comprend... ", on entend selon l'invention des " fils formés à partir de filaments de verre dont la composition comprend... ", les filaments de verre étant éventuellement associés à des filaments organiques avant le rassemblement des filaments en fils.

Les avantages présentés par les fils de verre selon l'invention seront mieux appréciés à travers les exemples suivants notés Ex. 1 à Ex. 10, figurant dans le tableau I, illustrant la présente invention sans toutefois la limiter.

Des exemples comparatifs, notés A, B, C, D, E sont portés dans le tableau II.

Dans ces exemples, des fils de verre composés de filaments de verre de 14 μm de diamètre sont obtenus par étirage de verre fondu, le verre présente la composition mentionnée dans le tableau I, exprimée en pourcentages pondéraux.

Quand la somme de toutes les teneurs de tous les composés est légèrement inférieure ou supérieure à 100 %, il est à comprendre que le taux résiduel correspond aux impuretés, composants minoritaires non analysés, taux d'au plus 1 à 2 % et/ou n'est dû qu'à l'approximation acceptée dans ce domaine dans les méthodes d'analyse utilisées.

On note R1, le ratio : $Al_2O_3/CaO$.

On note R2, le ratio :

$$\frac{SiO_2 + Al_2O_3}{RO + R_2O + B_2O_3}.$$

On note T(log 2,5) la température à laquelle la viscosité du verre est de $10^{2.5}$ Poises (décipascal seconde).

On note T (log 3) la température à laquelle la viscosité du verre est de $10^3$ Poises (décipascal seconde).

On note $T_{liquidus}$ la température de liquidus du verre, correspondant à la température à laquelle la phase la plus réfractaire, qui peut dévitrifier dans le verre, a une vitesse de croissance nulle et correspond ainsi à la température de fusion de cette phase dévitrifiée.

On nomme "plage de fibrage" la différence entre les températures : T(log 2,5) - $T_{liquidus}$.

Toutes les compositions selon l'invention (Ex. 1 à Ex. 10) présentent une plage de fibrage supérieure à 100°C, voire supérieure à 110°C, et même supérieure à 120°C.

Les compositions selon l'invention ont une viscosité compatible avec le procédé de fibrage, avec notamment une température, T(log 2,5), inférieure ou égale à 1330°C, et même notamment inférieure à 1320°C.

Les compositions selon l'invention ont des températures de liquidus, $T_{liquidus}$, compatibles avec le procédé de fibrage, notamment inférieures ou égales à 1200°C.

Les compositions selon l'invention présentent un ratio R1 inférieur à 0,7.

Les compositions selon l'invention présentent un ratio R2, somme de formateur de réseau divisé par la somme des modificateurs, compris entre 2,35 et 2,7.

Les exemples comparatifs, A à E, permettent d'illustrer les avantages de la zone sélectionnée selon l'invention.

En effet, l'exemple A illustre le cas des teneurs en silice plus élevées que selon l'invention, avec une somme $SiO_2 + Al_2O_3 > 73$ %, et le ratio R2 est élevé, supérieur à 2,8. On obtient avec ce verre une bonne plage de fibrage, mais une température T(log 2,5) supérieure à 1350°C ce qui entraîne des surcoûts pour le conditionnement du verre.

L'exemple B illustre le cas d'une composition pauvre en silice, avec $SiO_2 + Al_2O_3 < 70$ %. Le ratio R2 est faible, inférieur à 2,35.

On obtient alors une température T(log 2,5) avantageuse pour le conditionnement du verre, mais la plage de fibrage, inférieure à 100°C, est insuffisante pour obtenir de bon rendement de fibrage.

L'exemple C illustre le cas d'une composition à faible teneur en alumine, avec $SiO_2 + Al_2O_3 < 70\%$. On observe les mêmes conclusions que pour l'exemple B.

L'exemple D illustre le cas où $SiO_2 + Al_2O_3$ est compris dans la plage souhaitée, mais où le ratio R1 est supérieur ou égal à 0,7. Dans ce cas on observe une température de liquidus élevée, de 1240°C. Cette dernière conduit à une plage de fibrage insuffisante, inférieure à 100°C. Il apparaît que pour conserver des températures de liquidus inférieures ou égales à 1200°C, il est souhaitable de respecter le critère R1 < 0,7.

L'exemple E illustre le cas de taux en silice élevé (58 %) avec un taux de bore inférieur à 2 %. Le ratio R2 est supérieur à 2,7. Dans ce cas, la température T(log 2,5) atteint 1350°C, ce qui reste trop élevé par rapport aux applications visées dans l'invention.

Les fils de verre selon l'invention conviennent avantageusement pour toutes les applications habituelles des fils de verre E classiques.

| | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|
| $SiO_2$ | 56,5 | 55 | 58 | 58 | 58 | 57,5 | 57 | 56,8 | 56,5 | 56,5 |
| $Al_2O_3$ | 15 | 15 | 14 | 14 | 14 | 14 | 15 | 15 | 15 | 15 |
| $SiO_2 + Al_2O_3$ | 71,5 | 70 | 72 | 72 | 72 | 71,5 | 72 | 71,8 | 71,5 | 71,5 |
| $CaO$ | 23 | 24 | 21,5 | 21,5 | 22,5 | 23,5 | 22 | 22,5 | 23 | 24 |
| $MgO$ | 2 | 3 | 1,5 | 3 | 2 | 1,5 | 3 | 4 | 2,5 | 2,5 |
| $RO = CaO + MgO$ | 25 | 27 | 23 | 24,5 | 24,5 | 25 | 25 | 26,5 | 26,5 | 26,5 |
| $R_2O = Na_2O + K_2O + Li_2O$ | 1 | 1 | 2 | 1 | 1 | 1 | 1 | 1 | 0,1 | 0,1 |
| $B_2O_3$ | 2 | 1,5 | 3 | 2,5 | 2,5 | 2,5 | 2 | 0,5 | 2,8 | 2 |
| $R1 = Al_2O_3/CaO$ | 0,65 | 0,63 | 0,65 | 0,65 | 0,62 | 0,6 | 0,68 | 0,67 | 0,65 | 0,63 |
| $R2 = \dfrac{SiO_2 + Al_2O_3}{RO + R_2O + B_2O_3}$ | 2,55 | 2,37 | 2,57 | 2,67 | 2,57 | 2,50 | 2,57 | 2,56 | 2,42 | 2,5 |
| $T(\log 2,5)$ (°C) | 1315 | 1300 | 1320 | 1320 | 1325 | 1315 | 1320 | 1315 | 1320 | 1320 |
| $T(\log 3)$ (°C) | 1235 | 1220 | 1235 | 1240 | 1240 | 1235 | 1240 | 1240 | 1240 | 1240 |
| $T_{liquidus}$ (°C) | 1180 | 1200 | ≤ 1200 | ≤ 1200 | ≤ 1200 | ≤ 1200 | ≤ 1200 | ≤ 1200 | ≤ 1200 | ≤ 1200 |
| Plage de fibrage (°C) | 135 | 100 | ≥ 120 | ≥ 120 | ≥ 125 | ≥ 115 | ≥120 | ≥ 115 | ≥ 120 | ≥ 120 |

Tableau I

7

Tableau II

|  | A | B | C | D | E |
|---|---|---|---|---|---|
| $SiO_2$ | 60,8 | 54 | 57 | 56 | 58 |
| $Al_2O_3$ | 12,7 | 15 | 12 | 16 | 15 |
| $SiO_2+Al_2O_3$ | 73,5 | 69 | 69 | 72 | 73 |
| CaO | 21,5 | 23 | 23,5 | 22,3 | 22 |
| MgO | 3,2 | 3,5 | 3,5 | 3 | 1,5 |
| RO = CaO+MgO | 24,7 | 26,5 | 27 | 25,3 | 23,5 |
| $R_2O = Na_2O+K_2O+Li_2O$ | 0,55 | 1,5 | 1 | 0,7 | 1,5 |
| $B_2O_3$ | 0,5 | 2,5 | 2 | 1 | 1,5 |
| $R1=Al_2O_3/CaO$ | 0,59 | 0,65 | 0,5 | 0,72 | 0,68 |
| $R2=\dfrac{SiO_2 + Al_2O_3}{RO + R_2O + B_2O_3}$ | 2,85 | 2,26 | 2,3 | 2,6 | 2,75 |
| T(log 2,5) (°C) | 1380 | 1275 | 1270 | 1330 | 1350 |
| T(log 3) (°C) | 1290 | 1200 | 1195 | 1250 | 1265 |
| $T_{liquidus}$(°C) | 1200 | 1190 | 1190 | 1240 | 1190 |
| Plage de fibrage (°C) | 180 | 85 | 80 | 90 | 160 |

## Revendications

1.  Fil de verre de renforcement dont la composition comprend les constituants suivants, dans les limites définies ci-après, exprimées en pourcentages pondéraux :

| | |
|---|---|
| $SiO_2$ | 54,5 à 58 % |
| $Al_2O_3$ | 12 à 15,5 % |
| $SiO_2 + Al_2O_3$ | 70 à 73 % |
| CaO | 17 à 25 % |
| MgO | 0 à 5 % |
| RO = CaO + MgO | 21 à 28 % |
| $R_2O = Na_2O + K_2O + Li_2O$ | jusqu'à 2% |
| $TiO_2$ | moins de 1 % |
| $Fe_2O_3$ | moins de 0,5 % |
| $B_2O_3$ | jusqu'à 3 % |
| $F_2$ | moins de 1 % |

et telle que le ratio $R1 = Al_2O_3/CaO$ soit inférieur à 0,7, et lorsque $SiO_2$ est supérieur à 57 %, le taux de bore $B_2O_3$ est supérieur à 2 %.

2.  Fil de verre selon la revendication 1, **caractérisé en ce que** la composition respecte le critère :

$$2,35 < R2 = \frac{SiO_2 + Al_2O_3}{RO + R_2O + B_2O_3} < 2,70$$

3.  Fil de verre selon la revendication 1 ou 2, **caractérisé en ce que** la composition comprend un taux de silice, $SiO_2$, tel que $SiO_2 \le 57$ %.

4.  Fil de verre selon l'une des revendications 1, 2 ou 3 **caractérisé en ce que** la composition comprend un taux de bore, $B_2O_3$, tel que :

$$B_2O_3 \leq 0.5\ \%$$

**5.** Fil de verre selon l'une des revendications 1, 2 ou 3, **caractérisé en ce que** la composition comprend un taux de bore, $B_2O_3$, tel que :

$$0,5\ \% \leq B_2O_3 \leq 3\ \%$$

**6.** Composite de fils de verre et de matière(s) organique(s) et/ou inorganique(s), **caractérisé en ce qu'**il comprend des fils de verre tels que définis par l'une des revendications 1 à 5.

**7.** Procédé de fabrication de fils de verre tels que définis dans l'une des revendications 1 à 5 selon lequel on étire une multiplicité de filets de verre fondu, s'écoulant d'une multiplicité d'orifices disposés à la base d'une ou plusieurs filières, sous la forme d'une ou plusieurs nappes de filaments continus, puis on rassemble les filaments en un ou plusieurs fils que l'on collecte sur un support en mouvement.

**8.** Procédé selon la revendication 7, **caractérisé en ce que** le verre fondu alimentant les orifices de la ou des filières présente la composition suivante, exprimée en pourcentages pondéraux :

| | |
|---|---|
| $SiO_2$ | 54,5 à 58 % |
| $Al_2O_3$ | 12 à 15,5 % |
| $SiO_2 + Al_2O_3$ | 70 à 73 % |
| CaO | 17 à 25% |
| MgO | 0 à 5 % |
| RO = CaO+MgO | 21 à 28 % |
| $R_2O = Na_2O + K_2O + Li_2O$ | jusqu'à 2% |
| $TiO_2$ | moins de 1 % |
| $Fe_2O_3$ | moins de 0,5 % |
| $B_2O_3$ | jusqu'à 3 % |
| $F_2$ | moins de 1 % |

et telle que le ratio $R1 = Al_2O_3/CaO$ soit inférieur à 0,7, et lorsque $SiO_2$ est supérieur à 57 %, le taux de bore $B_2O_3$ est supérieur à 2 %.

**9.** Procédé selon l'une des revendication 7 ou 8, **caractérisé en ce que** le verre fondu est obtenu à partir de matières premières mélangées dans des proportions appropriées, une partie au moins desdites matières premières étant des déchets de fils de verre.

**10.** Procédé selon la revendication 9, **caractérisé en ce que** les déchets sont des déchets de fils de verre E et/ou des déchets de fils de verre tels que définis selon l'une des revendications 1 à 5.

**11.** Procédé selon l'une des revendications 9 ou 10, **caractérisé en ce que** les déchets représentent de 0 à 35 % en poids des matières premières.

**12.** Composition de verre adaptée à la réalisation de fils de verre de renforcement comprenant les constituants suivants, dans les limites définies ci-après exprimées en pourcentages pondéraux :

| | |
|---|---|
| $SiO_2$ | 54,5 à 58 % |
| $Al_2O_3$ | 12 à 15,5 % |
| $SiO_2 + Al_2O_3$ | 70 à 73 % |
| CaO | 17 à 25 % |
| MgO | 0 à 5 % |
| RO=CaO+MgO | 21 à 28 % |
| $R_2O = Na_2O + K_2O + Li_2O$ | jusqu'à 2% |

(suite)

| | |
|---|---|
| TiO$_2$ | moins de 1 % |
| Fe$_2$O$_3$ | moins de 0,5 % |
| B$_2$O$_3$ | jusqu'à 3 % |
| F$_2$ | moins de 1 % |

et telle que le ratio R1 = Al$_2$O$_3$CaO soit inférieur à 0,7, et lorsque SiO$_2$ est supérieur à 57 %, le taux de bore B$_2$O$_3$ est supérieur à 2 %.

**Patentansprüche**

1. Verstärkungsglasfaser, deren Zusammensetzung die folgenden Bestandteile in den hierunter definierten Grenzen, ausgedrückt in Gewichtsprozenten, enthält:

| | |
|---|---|
| SiO$_2$ | 54,5 bis 58% |
| Al$_2$O$_3$ | 12 bis 15,5% |
| SiO$_2$ + Al$_2$O$_3$ | 70 bis 73% |
| CaO | 17 bis 25% |
| MgO | 0 bis 5% |
| RO = CaO + MgO | 21 bis 28% |
| R$_2$O = Na$_2$O + K$_2$O + Li$_2$O | bis zu 2% |
| TiO$_2$ | weniger als 1% |
| Fe$_2$O$_3$ | weniger als 0,5% |
| B$_2$O$_3$ | bis zu 3% |
| F$_2$ | weniger als 1% |

und derart, dass das Verhältnis R1 = Al$_2$O$_3$/CaO kleiner ist, als 0,7, und dass der Anteil an B$_2$O$_3$ höher ist, als 2%, wenn SiO$_2$ mehr als 57% ausmacht.

2. Glasfaser nach Patentanspruch 1, **dadurch gekennzeichnet, dass** die Zusammensetzung folgendem Kriterium genügt:

$$2,35 < R2 = \frac{SiO_2 + Al_2O_3}{RO + R_2O + B_2O_3} < 2,70$$

3. Glasfaser nach Patentanspruch 1 oder 2, **dadurch gekennzeichnet, dass** die Zusammensetzung einen Anteil an Siliziumdioxid, SiO$_2$ aufweist, so dass SiO$_2$ ≤ 57% gilt.

4. Glasfaser nach einem der Patentansprüche 1, 2 oder 3, **dadurch gekennzeichnet, dass** die Zusammensetzung einen Anteil an Bor, B$_2$O$_3$ aufweist, so dass gilt:

$$B_2O_3 \leq 0,5\%.$$

5. Glasfaser nach einem der Patentansprüche 1, 2 oder 3, **dadurch gekennzeichnet, dass** die Zusammensetzung einen Anteil an Bor, B$_2$O$_3$ aufweist, so dass gilt:

$$0,5\% \leq B_2O_3 \leq 3\%.$$

6. Verbundwerkstoff aus Glasfasern und organischem/n und/oder anorganischem/n Werkstoff(en), **dadurch gekennzeichnet, dass** er Glasfasern enthält, wie sie in einem der Patentansprüche 1 bis 5 definiert werden.

7.  Verfahren zur Herstellung von Glasfasern, wie sie in einem der Patentansprüche 1 bis 5 definiert wurden, in dem eine Vielzahl von dünnen Strahlen geschmolzenen Glases, die aus einer Vielzahl von Öffnungen fließen, die unten in einer oder mehreren Spinndüsen angeordnet sind, in Form einer oder mehrerer Lagen ununterbrochener Filamente gezogen wird, wonach die Filamente zu einem oder mehreren Fäden zusammengefasst werden, die auf einem bewegten Träger gesammelt werden.

8.  Verfahren nach Patentanspruch 7, **dadurch gekennzeichnet, dass** das geschmolzene Glas, das den Öffnungen der Spinndüse(n) zugeführt wird, die folgende Zusammensetzung, ausgedrückt in Gewichtsprozenten, aufweist:

| | |
|---|---|
| $SiO_2$ | 54,5 bis 58% |
| $Al_2O_3$ | 12 bis 15,5% |
| $SiO_2 + Al_2O_3$ | 70 bis 73% |
| CaO | 17 bis 25% |
| MgO | 0 bis 5% |
| RO = CaO + MgO | 21 bis 28% |
| $R_2O = Na_2O + K_2O + Li_2O$ | bis zu 2% |
| $TiO_2$ | weniger als 1% |
| $Fe_2O_3$ | weniger als 0,5% |
| $B_2O_3$ | bis zu 3% |
| $F_2$ | weniger als 1% |

und derart, dass das Verhältnis R1 = $Al_2O_3$/CaO kleiner ist, als 0,7, und dass der Anteil an $B_2O_3$ höher ist, als 2%, wenn $SiO_2$ mehr als 57% ausmacht.

9.  Verfahren nach einem der Patentansprüche 7 oder 8, **dadurch gekennzeichnet, dass** das geschmolzene Glas aus in geeigneten Proportionen gemischten Rohstoffen hergestellt wird, wobei mindestens ein Teil der genannten Rohstoffe Glasfaserabfälle sind.

10. Verfahren nach Patentanspruch 9, **dadurch gekennzeichnet, dass** die Abfälle Abfälle von E-Glasfasern und/oder Abfälle von Glasfasern sind, wie sie in einem der Patentansprüche 1 bis 5 definiert werden.

11. Verfahren nach einem der Patentansprüche 9 oder 10, **dadurch gekennzeichnet, dass** die Abfälle 0 bis 35 Gewichtsprozent der Rohstoffe darstellen.

12. Glasgemisch für die Herstellung von Verstärkungsglasfasern, die folgenden Bestandteile in den hierunter definierten Grenzen, ausgedrückt in Gewichtsprozenten, enthaltend:

| | |
|---|---|
| $SiO_2$ | 54,5 bis 58% |
| $Al_2O_3$ | 12 bis 15,5% |
| $SiO_2 + Al_2O_3$ | 70 bis 73% |
| CaO | 17 bis 25% |
| MgO | 0 bis 5% |
| RO = CaO + MgO | 21 bis 28% |
| $R_2O = Na_2O + K_2O + Li_2O$ | bis zu 2% |
| $TiO_2$ | weniger als 1% |
| $Fe_2O_3$ | weniger als 0,5% |
| $B_2O_3$ | bis zu 3% |
| $F_2$ | weniger als 1% |

und derart, dass das Verhältnis R1 = $Al_2O_3$/CaO kleiner ist, als 0,7, und dass der Anteil an $B_2O_3$ höher ist, als 2%, wenn $SiO_2$ mehr als 57% ausmacht.

**Claims**

1. Reinforcing glass fibre, the composition of which comprises the following constituents, within the limits defined below, expressed in percentages by weight:

| | |
|---|---|
| $SiO_2$ | 54,5 to 58 % |
| $Al_2O_3$ | 12 to 15.5 % |
| $SiO_2 + Al_2O_3$ | 70 to 73 % |
| CaO | 17 to 25 % |
| MgO | 0 to 5 % |
| $RO = CaO + MgO$ | 21 to 28 % |
| $R_2O = Na_2O + K_2O + Li_2O$ | up to 2 % |
| $TiO_2$ | less than 1 % |
| $Fe_2O_3$ | less than 0.5 % |
| $B_2O_3$ | up to 3 % |
| $F_2$ | less than 1 % |

and such that the ratio $R1 = Al_2O_3/CaO$ is less than 0.7, and when $SiO_2$ is more than 57 %, the proportion of boron $B_2O_3$ is more than 2 %.

2. Glass fibre according to claim 1, **characterized in that** the composition conforms to the criterion:

$$2.35 < R2 = \frac{SiO_2 + Al_2O_3}{RO + R_2O + B_2O_3} < 2.70$$

3. Glass fibre according to claim 1 or 2, **characterized in that** the composition comprises a proportion of silica, $SiO_2$, such that $SiO_2 < 57$ %.

4. Glass fibre according to any one of claims 1, 2 or 3, **characterized in that** the composition comprises a proportion of boron, $B_2O_3$, such that:

$$B_2O_3 \leq 0.5 \text{ %}$$

5. Glass fibre according to any one of claims 1, 2 or 3, **characterized in that** the composition comprises a proportion of boron, $B_2O_3$, such that:

$$0.5 \text{ %} < B_2O_3 < 3 \text{ %}$$

6. A composite of glass fibres and organic and/or inorganic material(s), **characterised in that** it comprises glass fibres as defined by one of claims 1 to 5.

7. A method for manufacturing glass fibres as defined in one of claims 1 to 5, according to which a multiplicity of streams of molten glass, flowing from a multiplicity of openings disposed at the base of one or more dies, is drawn in the form of one or more sheets of continuous filaments, then the filaments are assembled into one or more fibres which are collected on a moving support.

8. A method according to claim 7, **characterized in that** the molten glass feeding the openings of the die or dies has the following composition, expressed in percentages by weight :

| | |
|---|---|
| $SiO_2$ | 54,5 to 58 % |
| $Al_2O_3$ | 12 to 15.5 % |
| $SiO_2 + Al_2O_3$ | 70 to 73 % |

(continued)

| | |
|---|---|
| CaO | 17 to 25 % |
| MgO | 0 to 5 % |
| RO = CaO + MgO | 21 to 28 % |
| $R_2O = Na_2O + K_2O + Li_2O$ | up to 2 % |
| $TiO_2$ | less than 1 % |
| $Fe_2O_3$ | less than 0.5 % |
| $B_2O_3$ | up to 3 % |
| $F_2$ | less than 1 % |

and such that the ratio R1 = $Al_2O_3$/CaO is less than 0.7, and when $SiO_2$ is more than 57 %, the proportion of boron $B_2O_3$ is more than 2 %.

9. A method according to claim 7 or claim 8, **characterized in that** the molten glass is obtained from raw materials mixed in suitable proportions, at least part of said raw materials being glass fibre waste.

10. A method according to claim 9, **characterized in that** the waste is waste E glass fibres and/or waste glass fibres as defined according to one of claims 1 to 5.

11. A method according to claim 9 or claim 10, **characterised in that** the waste represents from 0 to 35 % by weight of the raw materials.

12. A glass composition suitable for producing reinforcing glass fibres comprising the following constituents, within the limits defined below, expressed in percentages by weight:

| | |
|---|---|
| $SiO_2$ | 54,5 to 58 % |
| $Al_2O_3$ | 12 to 15.5 % |
| $SiO_2 + Al_2O_3$ | 70 to 73 % |
| CaO | 17 to 25 % |
| MgO | 0 to 5 % |
| RO = CaO + MgO | 21 to 28 % |
| $R_2O = Na_2O + K_2O + Li_2O$ | up to 2 % |
| $TiO_2$ | less than 1 % |
| $Fe_2O_3$ | less than 0.5 % |
| $B_2O_3$ | up to 3 % |
| $F_2$ | less than 1 % |

and such that the ratio R1 = $Al_2O_3$/CaO is less than 0.7, and when $SiO_2$ is more than 57 %, the proportion of boron $B_2O_3$ is more than 2 %.